# EUROPEAN PATENT APPLICATION

(11) **EP 4 848 349 A1**
(43) Date of publication of application: **02.12.2026**
(21) Application number: 25810256.5
(22) Date of filing: 09.05.2025
(51) Int. Cl.: H01M 4/13, H01M 4/62, H01M 10/0525, H01M 4/139, H01M 4/04, H01M 4/02

(54) **DRY ELECTRODE AND MANUFACTURING METHOD THEREOF**

(30) Priority: 09.05.2024 KR 20240061359
(71) Applicant: LG Chem, Ltd., Seoul 07336 (KR)
(72) Inventor: LEE, Tae-Hee, Daejeon 34122 (KR); MUN, Sung Cik, Daejeon 34122 (KR); PARK, Woo-Bin, Daejeon 34122 (KR); HAN, Sung-Jae, Daejeon 34122 (KR)
(74) Representative: Hoffmann Eitle
(86) International application number: PCT/KR2025/006297
(87) International publication number: WO 2025/234839

(57) **Abstract**

The present disclosure relates to a dry electrode including a binder polymer having a complex viscosity of 1500 Pa·s or less at 180°C and 0.1 Hz. The dry electrode according to the present disclosure may provide sufficient discharge capacity while significantly reducing VOC emissions in the manufacture. Furthermore, the dry electrode may have sufficient mechanical strength without using fibrillation of the binder polymer.

## Description

### TECHNICAL FIELD

The present disclosure relates to a dry electrode.

This application is based on and claims priority from Korean Patent Application No. 10-2024-0061359 filed on May 9, 2024 with the Korean Intellectual Property Office, the disclosure of which is incorporated herein in its entirety by reference.

### BACKGROUND

Due to the increasing use of fossil fuels, there is a growing demand for the use of alternative energy and clean energy, and in such circumstances, many studies are being made in the field of energy generation and storage using electrochemistry.

Currently, a typical example of electrochemical devices using electrical and chemical energy is secondary batteries, and the range of applications of secondary batteries is gradually expanding.

One of typical secondary batteries, lithium secondary batteries, are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of applications of lithium secondary batteries is expanding to an auxiliary power source through a grid.

A manufacturing process of lithium secondary batteries is largely classified into an electrode process, an assembly process and a formation/ageing process. The electrode process is sub-classified into an active material mixing process, an electrode coating process, a drying process, a rolling process, a slitting process and a winding process.

The active material mixing process is a process of mixing a coating material for forming an electrode active layer in which electrochemical reaction actually occurs in the electrode, and specifically, involves mixing an electrode active material which is an essential element of the electrode with an additive, for example, a conductive material, a filler, a binder for binding powder particles and adhesion to a current collector and a solvent for imparting viscosity and dispersing the powder to prepare a flowable slurry.

The mixture composition for forming the electrode active layer is referred to as an electrode mixture in a broad sense.

Subsequently, the electrode coating process of applying the electrode mixture to the current collector having electrical conductivity is performed, followed by the drying process to remove a solvent from the electrode mixture, and additionally, rolling is performed on the electrode to manufacture with a predetermined thickness.

Meanwhile, as the solvent contained in the electrode mixture evaporates in the drying process, defects such as pinholes or cracks may occur in the electrode active layer. Additionally, the active layer is not uniformly dried all over the entire inner/outer area, and due to a difference in solvent evaporation rate, some regions get dry earlier and the powder at the corresponding regions floats, and some other regions get dry later at a time interval, resulting in low quality of the electrode. In addition, organic solvents such as N-methyl-2-pyrrolidone (NMP) are volatile organic compounds and may produce volatile organic compounds (VOCs) in large amounts during drying. The VOC is the cause of environmental pollution, and requires a solvent recovery system in the manufacturing process, resulting in increased equipment cost and energy consumption. Furthermore, stronger environmental regulations on VOC emissions increase the burden of process operation. Accordingly, there is an emerging need for development of electrode manufacturing technology with little or no VOC emissions by eliminating or minimizing VOCs from their sources.

Recently, many studies are being conducted to manufacture dry electrodes that do not use solvents.

A dry electrode is generally manufactured by laminating a free-standing film including an active material, a binder and a conductive material to a current collector. During the process, a high shear mixing process such as jet milling is performed to fibrillate the binder, and in this instance, when the high shear mixing process is applied to the active material that is prone to easily break, fine powder having small particle size may be produced, leading to lower mechanical performance or electrochemical performance, and when high shear mixing is too much, the produced binder fibers may be broken, resulting in lower mechanical strength of the free-standing film. In addition, during the jet-milling process, substances may stick to the inside of the equipment, and this may interrupt the flow of highpressure air and block the flow channel in the disfavor of mass production.

Accordingly, there is an urgent need for development of dry electrode manufacturing technology designed to solve the above-described problems.

### DISCLOSURE

### Technical Problem

The present disclosure is directed to providing an electrode that is not manufactured by a wet method to achieve sufficient discharge capacity while significantly reducing volatile organic compound (VOC) emissions in the manufacturing process.

The present disclosure is further directed to providing a dry electrode having mechanical strength without binder polymer fibrillation.

### Technical Solution

An aspect of the present disclosure provides an electrode of the following embodiments.

The electrode according to a first embodiment includes:
an electrode current collector; and an electrode active material layer present on at least one surface of the electrode current collector,
wherein the electrode active material layer includes an electrode active material, a conductive material and a binder polymer, and
wherein the binder polymer has a complex viscosity of 1500 Pa·s or less at 180°C and 0.1 Hz.

According to a second embodiment, in the first embodiment,
the binder polymer may have a melt index of 100 g/10 min or more under a load of 2.16 kg at 230°C.

According to a third embodiment, in the first or second embodiment,
the binder polymer may have a complex viscosity of 1000 Pa·s or less at 180°C and 0.1 Hz.

According to a fourth embodiment, in any one of the first to third embodiments,
the binder polymer may include a polyolefin-based polymer.

According to a fifth embodiment, in any one of the first to fourth embodiments,
the binder polymer may include polyethylene, polypropylene, polybutylene, polypentene or two or more thereof.

According to a sixth embodiment, in any one of the first to fifth embodiments,
a weight average molecular weight of the binder polymer may be 5,000 g/mol to 200,000 g/mol.

According to a seventh embodiment, in any one of the first to sixth embodiments,
the binder polymer may be included in an amount of 1 to 10 parts by weight based on total 100 parts by weight of the electrode active material layer.

According to an eighth embodiment, in any one of the first to seventh embodiments,
an average particle size (D50) of the binder polymer may be 0.1 to 20 µm.

According to a ninth embodiment, in any one of the first to eighth embodiments,
an average particle size (D50) of the binder polymer may be 0.01 to 2 times larger than an average particle size (D50) of the electrode active material.

According to a tenth embodiment, in any one of the first to ninth embodiments,
a tensile strength of the electrode may be 10 gf/mm² to 100 gf/mm².

A secondary battery according to an eleventh embodiment includes:
a positive electrode; a negative electrode; a separator interposed between the positive electrode and the negative electrode; and an electrolyte solution,
wherein at least one of the positive electrode and the negative electrode may be the electrode according to any one of the first to tenth embodiments.

A method for manufacturing an electrode according to a twelfth embodiment includes:
(S1) dry-mixing an electrode active material, a conductive material and a binder polymer without a solvent to obtain a mixture;
(S2) feeding the mixture between a plurality of rolls to perform calendaring to manufacture an electrode sheet; and
(S3) laminating the electrode sheet on at least one surface of an electrode current collector to manufacture the electrode,
wherein the binder polymer may have a complex viscosity of 1500 Pa·s or less at 180°C and 0.1 Hz.

### Advantageous Effects

The electrode according to an aspect of the present disclosure is manufactured by a dry method, thereby significantly reducing VOC emissions in the manufacturing process.

The electrode according to an aspect of the present disclosure includes the binder polymer having low complex viscosity, thereby ensuring sufficient mechanical strength without fibrillation of the binder polymer.

The secondary battery according to an aspect of the present disclosure may have sufficient discharge capacity.

### BRIEF DESCRIPTION OF THE DRAWINGS

The accompanying drawings illustrate the exemplary embodiments of the present disclosure and together with the above description, serve to provide a better understanding of the technical aspects of the present disclosure, and thus the present disclosure should not be construed as being limited to the drawings. In the drawings, for clarity of description, the shape, size, scale or proportion of the elements may be exaggerated for emphasis.
FIG. 1 is an image of an electrode sheet according to an embodiment of the present disclosure when observed.
FIG. 2 is an image of an electrode sheet according to an embodiment of the present disclosure when observed.
FIG. 3 is an image of an electrode sheet according to a comparative example of the present disclosure when observed.

### BEST MODE

Hereinafter, the present disclosure will be described in detail with reference to the drawings. It should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms properly for the best explanation.

Accordingly, the embodiments described herein and the illustration in the drawings are provided to describe the present disclosure by way of example but not intended to be limiting, so it should be understood that other equivalents and modifications could be made thereto at the time the application was filed.

It should be further understood that "include", "comprise" or "have" when used in the specification, specifies the presence of the stated elements and does not preclude the presence or addition of one or more other elements unless expressly stated otherwise.

In this specification, 'A and/or B' refers to either A or B or both.

Unless stated otherwise, the temperature as used herein refers to Celsius scale of temperature, and its unit is °C.

In this specification, "particle size Dn" refers to a particle size at n% of cumulative particle size distribution. That is, D50 refers to a particle size at 50% of cumulative particle size distribution, D90 refers to a particle size at 90% of cumulative particle size distribution, and D10 refers to a particle size at 10% of cumulative particle size distribution. The Dn may be measured using a laser diffraction method. Specifically, after a powder is dispersed in a dispersion medium and fed into a commercially available laser diffraction particle size measurement instrument (for example, Malvern; mastersizer 3000), the particle size distribution is calculated by measuring a diffraction pattern difference as a function of particle size when particles pass through a laser beam. The D10, D50 and D90 may be measured by calculating particle diameters at 10%, 50% and 90% points of the cumulative particle size distribution in the measurement instrument.

In this specification, the complex viscosity may be measured using Advanced Rheometric Expansion System (ARES-G2) at 180°C with a gradual change of frequency from 0.01 Hz to 100 Hz. In addition, the complex viscosity may be measured in the strain range (between 1% and 10%) in which polymers exhibit linear viscoelastic properties depending on the viscosity of each polymer.

Unless specified otherwise, the melt index or melt flow index (MFI) may be measured under the conditions of 230°C and 2.16 kg in accordance with ASTM D-1238.

An electrode according to an aspect of the present disclosure includes:
an electrode current collector; and an electrode active material layer present on at least one surface of the electrode current collector,
wherein the electrode active material layer includes an electrode active material, a conductive material and a binder polymer, and
wherein the binder polymer has the complex viscosity of 1500 Pa·s or less at 180°C and 0.1 Hz.

In the technical field of dry electrodes that do not use solvents to manufacture the electrode active material layer, electrodes are manufactured using polytetrafluoroethylene (PTFE) as a binder polymer and the PTFE's fibrillatable property. However, the active materials may be damaged in the PTFE fibrillation process. In addition, recently, there is a growing demand for electrodes free of fluorinated binders due to environmental concerns. In this circumstance, attempts have been made to manufacture dry electrodes using other binder polymers as an alternative to PTFE. However, the existing binder polymers do not mix well with conductive materials and electrode active materials in solvent-free environments.

Accordingly, the present disclosure uses the binder polymer having the complex viscosity of 1500 Pa·s or less at 180°C and 0.1 Hz. Because the binder polymer has high fluidity and can be dispersed well, the binder polymer is miscible with the conductive material and the electrode active material in solvent-free environments. Accordingly, the electrode including the binder polymer may have sufficient mechanical properties and improve life and discharge capacity characteristics of secondary batteries.

In the case of wet electrodes, a slurry for the electrode active material layer is applied to the electrode current collector and dried to remove a solvent from the slurry to form the electrode active material layer. In this case, as the solvent is dried, the electrode active material, the binder polymer and the conductive material in the electrode active material layer are not evenly dispersed. However, because the electrode of the present disclosure is manufactured by a dry manufacturing method, the electrode active material, the binder polymer and the conductive material may be evenly dispersed in the electrode active material layer.

In an embodiment of the present disclosure, the binder polymer may have the complex viscosity of 1500 Pa·s or less, 1000 Pa·s or less, 500 Pa·s or less, 300 Pa·s or less, or 70 Pa·s or less at 180°C and 0.1 Hz. When the complex viscosity of the binder polymer falls within the aforementioned range, the electrode may have sufficient mechanical strength such as tensile strength. Accordingly, the electrode may be manufactured without using fibrillation.

In addition, the binder polymer may have the melt viscosity of 0.0001 Pa·s or more at 200°C and 0.1 Hz. When the melt viscosity of the binder polymer falls within the aforementioned range, mechanical strength of the electrode such as tensile strength may be further improved.

In an embodiment of the present disclosure, the binder polymer may have the melt index of 100 g/10 min or more, 200 g/10 min or more, 300 g/10 min or more, 400 g/10 min or more, 500 g/10 min or more, 600 g/10 min or more, 700 g/10 min or more, 800 g/10 min or more, 900 g/10 min or more, 1000 g/10 min or more, 1300 g/10 min or more, or 1500 g/10 min or more, under a load of 2.16 kg at 230°C. When the melt index of the binder polymer falls within the aforementioned range, mechanical strength of the electrode such as tensile strength may be improved.

In an embodiment of the present disclosure, the binder polymer may include a polyolefin-based polymer, and may include, for example, polyethylene, polypropylene, polybutylene, polypentene or two or more thereof. The binder polymer may have the optimal melt index or viscosity in the conditions according to the present disclosure, as well as high fluidity.

In an embodiment of the present disclosure, the weight average molecular weight of the binder polymer may be 5,000 g/mol to 200,000 g/mol, 10,000 g/mol to 150,000 g/mol, or 30,000 to 100,000 g/mol. When the weight average molecular weight of the binder polymer falls within the aforementioned range, the optimal melt viscosity may be achieved, thereby enhancing adhesion strength and improving mechanical strength of the electrode such as tensile strength.

The weight average molecular weight may be measured by gel permeation chromatography (GPC).

In an embodiment of the present disclosure, the binder polymer may be included in an amount of 1 to 10 parts by weight or 1 to 5 parts by weight based on the total 100 parts by weight of the electrode active material layer. When the amount of the binder polymer falls within the aforementioned range, adhesion strength between the components of the electrode active material layer may be increased, and mechanical strength of the electrode such as tensile strength may be improved.

In an embodiment of the present disclosure, the average particle size D50 of the binder polymer may be 0.1 µm to 20 µm or 1 to 10 µm. When the average particle size of the binder polymer falls within the aforementioned range, the optimal melt viscosity may be achieved, thereby enhancing adhesion strength and improving mechanical strength of the electrode such as tensile strength.

The average particle size D50 of the binder polymer may be 0.01 to 2 times or 0.1 to 2 times larger than the average particle size D50 of the electrode active material. When the average particle size D50 of the binder polymer and the average particle size D50 of the electrode active material fall within the aforementioned range and they are similar to each other, the existing binder polymer cannot achieve high adhesion strength, but the binder polymer according to the present disclosure may achieve high adhesion strength between the electrode active materials and/or between the conductive materials.

In an embodiment of the present disclosure, the electrode current collector is not limited to a particular one and may include those having high conductivity without causing a chemical change in the corresponding battery. For example, the current collector may include stainless steel, aluminum, nickel, titanium, calcined carbon, copper, or aluminum or stainless steel treated with carbon, nickel, titanium or silver on the surface. The current collector may have the microtextured surface to increase the adhesion strength of the active material, and may come in different forms, for example, a film, a sheet, a foil, a net, a porous body, a foam or a non-woven fabric. Meanwhile, in an embodiment of the present disclosure, the current collector may be 10 µm to 50 µm in thickness, but the thickness is not limited to a particular range. The current collector may be, for example, 10 µm to 20 µm in thickness.

In an embodiment of the present disclosure, the electrode active material may be a positive electrode active material. The positive electrode active material is not limited to a particular one and may include any substance that may be used as positive electrode active materials of lithium ion secondary batteries. Its non-limiting examples may include any one of layered compounds such as lithium manganese composite oxide (LiMn₂O_{4,} LiMnO₂), lithium cobalt oxide (LiCoO₂) or lithium nickel oxide (LiNiO₂) or compounds substituted with one or more transition metals; lithium manganese oxide such as Chemical Formula Li₁₊ₓMn₂₋ₓO₄ (x is 0 to 0.33), LiMnO_{3,} LiMn₂O₃ or LiMnO_{2;} lithium copper oxide (Li₂CuO₂); vanadium oxide such as LiV₃O_{8,} LiV₃O_{4,} V₂O₅ or Cu₂V₂O_{7;} Ni-site type lithium nickel oxide represented by Chemical Formula LiNi₁₋ₓMₓO₂ (M = Co, Mn, Al, Cu, Fe, Mg, B or Ga and x = 0.01 to 0.3); lithium manganese composite oxide represented by Chemical Formula LiMn₂₋ₓMₓO₂ (M = Co, Ni, Fe, Cr, Zn or Ta, and x = 0.01 to 0.1) or Li₂Mn₃MO₈ (M = Fe, Co, Ni, Cu or Zn); Li₁₊ₓ(NiₐCo_{b}Mn_{c}Al_{d})₁₋ₓO₂ with partial substitution of lithium in Chemical Formula by aluminum ions (x = 0 to 0.03, a = 0.3 to 0.95, b = 0.01 to 0.35, c = 0.01 to 0.5, d = 0.001 to 0.03, a+b+c+d =1); disulfide compounds; Fe₂(MoO₄)_{3,} or a mixture of two or more thereof.

In an embodiment of the present disclosure, the electrode active material may be a negative electrode active material. The negative electrode active material may include any compound capable of reversible intercalation and deintercalation of lithium. Specific examples may include any one of carbonaceous materials such as artificial graphite, natural graphite, graphitizing carbon fibers or amorphous carbon; metallic compounds capable of forming alloys with lithium such as Si, Al, Sn, Pb, Zn, Bi, In, Mg, Ga, Cd, Si alloys, Sn alloys or Al alloys; metal oxide capable of doping and dedoping lithium such as SiOβ (0 < β < 2), SnO2, vanadium oxide or lithium vanadium oxide; or composites containing the metallic compounds and the carbonaceous materials, such as Si-C composites or Sn-C composites, or a mixture of two or more of these. In addition, the negative electrode active material may include a metallic lithium thin film. In addition, the carbon material may include low-crystalline carbon and high-crystalline carbon. The low-crystalline carbon may typically include soft carbon and hard carbon, and the high-crystalline carbon may include high-temperature calcined carbon, for example, amorphous, platy, flaky, spherical or fibrous natural or artificial graphite, Kish graphite, pyrolytic carbon, mesophase pitch-based carbon fibers, meso-carbon microbeads, mesophase pitches or petroleum or coal tar pitch derived cokes.

In an embodiment of the present disclosure, the thickness of the electrode active material layer may be, for example, 10 to 200 µm, 20 to 180 µm, 30 to 160, 40 to 140 µm, or 50 to 120 µm. The thickness of the electrode active material layer may be measured through a known means for measuring the thickness of each component in the technical field, such as a thickness measurement instrument or a scanning electron microscopic (SEM) image. In an embodiment of the present disclosure, the thickness of the electrode active material layer may be measured using a thickness measurement instrument (Mitutoyo, VL-50S-B), but is not limited thereto.

In an embodiment of the present disclosure, the conductive material is not limited to a particular type and may include any material having conductive properties without causing a chemical change in the corresponding battery. Its non-limiting examples may include graphite such as natural graphite or artificial graphite; carbon black-based carbon compounds such as carbon black, acetylene black, Ketjen black, channel black, furnace black, lamp black or thermal black; conductive fibers such as carbon fibers or metal fibers; fluoro carbon; metal powder such as aluminum powder or nickel powder; conductive whiskers such as zinc oxide whiskers or potassium titanate whiskers; conductive metal oxide such as titanium oxide; or conductive materials such as polyphenylene derivatives. In a specific embodiment, the positive electrode conductive material may include one or two or more selected from them.

In an embodiment of the present disclosure, in addition to the polyolefin-based polymer, the binder polymer may further include any binder polymer commonly used in the art. For example, the binder polymer may include styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylenepropylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol, or two or more thereof. Specifically, the binder polymer may include styrene butadiene rubber (SBR), nitrile butadiene rubber (NBR), polymethylmethacrylate, polyethylhexylacrylate or polybutylacrylate. Additionally, the binder polymer may include one or two or more selected from them.

In an embodiment of the present disclosure, the tensile strength of the electrode may be 10 to 100 gf/mm².

The tensile strength may be determined by measuring a stress value at the highest point on a stress-strain graph when slowly pulling at the speed of 2 mm/min at 25°C, wherein the graph plots the magnitude of stress applied to the electrode, measured using a universal testing machine (LLOYD LS1, load cell 10 N) from Ametek Inc.

A secondary battery according to an aspect of the present disclosure includes a positive electrode; a negative electrode; a separator interposed between the positive electrode and the negative electrode; and an electrolyte solution,
wherein at least one of the positive electrode and the negative electrode is the above-described electrode according to the present disclosure.

In an embodiment of the present disclosure, the secondary battery may include a lithium secondary battery. The lithium secondary battery may include a lithium metal secondary battery, a lithium ion secondary battery, a lithium polymer secondary battery or a lithium ion polymer secondary battery. The lithium secondary battery is not limited to a particular shape, but may have a cylindrical shape, a prismatic shape, a pouch shape or a coin shape using a can.

In an embodiment of the present disclosure, the negative electrode may include a negative electrode current collector; and a negative electrode active material layer present on at least one surface of the negative electrode current collector, and the negative electrode active material layer may include a negative electrode active material, a binder polymer and a conductive material.

The negative electrode active material layer may include graphite and a silicon-based compound as the negative electrode active material, and in this instance, the graphite and the silicon-based compound may be included at a weight ratio ranging from 70:30 to 99:1. Additionally, the silicon-based compound may include silicon and/or silicon oxide, and the silicon oxide may include at least one of compounds represented by the following Chemical Formula 1.

Chemical Formula 1 SiOₓ

In the above Chemical Formula 1, 0≤x<2. In the above Chemical Formula 1, SiO₂ (x=2 in the above Chemical Formula 1) does not react with lithium ions, and cannot store lithium. Preferably, x is smaller than 2. Specifically, in terms of structural stability of the electrode active material, 0.5≤x≤1.5.

The silicon-based compound may further include a carbon coating layer covering all or at least a part of the active material particle surface. The carbon coating layer may act as a protective layer to suppress the volume expansion of the negative electrode active material particles including the silicon-based compound and prevent side reactions with the electrolyte solution. The carbon coating layer may be included in the silicon-based compound in an amount of 0.1 wt% to 10 wt%, and preferably 3 wt% to 7 wt%, and when the amount of the carbon coating layer falls within the aforementioned range, the carbon coating layer may control the volume expansion of the negative electrode active material particles including the silicon-based compound very effectively and prevent side reactions with the electrolyte solution.

The negative electrode active material particles including the silicon-based compound may have the particle size D₅₀ of 3 µm to 10 µm. When the particle size D₅₀ is smaller than 3 µm, high specific surface area may lead to larger reaction area with the electrolyte solution and more frequent side reactions with the electrolyte solution during charging and discharging, resulting in shorter battery life. In contrast, when the particle size D₅₀ is larger than 10 µm, large volume changes may arise from volume expansion/contraction of the active material particles during charging and discharging, causing chipping or cracking of the active material particles, resulting in low battery performance.

The graphite may include at least one selected from artificial graphite and natural graphite. The natural graphite may include unprocessed natural graphite such as flaky graphite, lump graphite or amorphous graphite, or spherical natural graphite. The flaky graphite and the lump graphite exhibit nearly perfect crystals, and the amorphous graphite has lower crystallinity. When considering electrode capacity, flaky graphite and lump graphite having higher crystallinity may be used. For example, flaky graphite may be transformed into a spherical shape. The spherical natural graphite may have the particle size of 5 to 30 µm, and preferably 10 to 25 µm.

The artificial graphite is generally produced by a graphitization method involving firing raw materials such as coal tar, coal tar pitch and petroleum-based heavy oil at or above 2,500°C, and may be used as the negative electrode active material through particle size adjustment such as grinding and secondary particle formation after the graphitization.

In general, artificial graphite exhibits a random distribution of crystallites within particles, has lower sphericity than natural graphite and includes pointed shapes. The artificial graphite may be powdery, flaky, block-like, platy or rod-like in shape, but to improve output characteristics, the artificial graphite may preferably have isotropic crystallite orientation to reduce the movement distance of lithium ions. In view of these aspects, the artificial graphite may be flaky and/or platy.

The artificial graphite includes mesophase carbon microbeads (MCMB), mesophase pitch-based carbon fibers (MPCF), artificial graphite produced by graphitization into a block shape or artificial graphite produced by graphitization into a powdery shape, widely used in commercial applications. In addition, the artificial graphite may have the particle size of 5 to 30 µm, and preferably 10 to 25 µm.

The specific surface area of the artificial graphite may be measured by Brunauer-Emmett-Teller (BET). For example, the specific surface area of the artificial graphite may be measured by BET 6-point analysis by a nitrogen gas adsorption flow method using a porosimetry analyzer (Bell Japan Inc, Belsorp-II mini). This is equally applied to the measurement of the specific surface area of the natural graphite as described below.

The tap density of the artificial graphite may be 0.7 g/cc to 1.1 g/cc, and specifically 0.8 g/cc to 1.05 g/cc. When the tap density is less than 0.7 g/cc outside the aforementioned range, insufficient contact area between particles leads to poor adhesive properties and low capacity per volume, and when the tap density is more than 1.1 g/cc, electrode tortuosity decreases and electrolyte wettability is reduced, resulting in low output characteristics during charging and discharging.

Here, the tap density is determined by putting 50g of precursor in a 100 cc tapping cylinder and tapping 3000 times using a COPLEY's JV-1000 measurement instrument and a SEISHIN (KYT-4000) measurement instrument. This is equally applied to the tap density measurement of the natural graphite as described below.

In addition, the average particle size D50 of the artificial graphite may be 8 µm to 30 µm, and specifically 12 µm to 25 µm. When the average particle size D50 of the artificial graphite is smaller than 8 µm, the specific surface area increases and the initial efficiency of the secondary battery decreases, resulting in low battery performance, and when the average particle size D50 is larger than 30 µm, adhesion strength is reduced and packing density decreases, resulting in low capacity.

The average particle size of the artificial graphite may be, for example, measured using a laser diffraction method. The laser diffraction method can generally measure particle sizes from the submicron level to a few millimeters, and obtain results with high reproducibility and high resolution. The average particle size D50 of the artificial graphite may be defined as a particle size at 50% of particle size distribution. For example, a method for measuring the average particle size D50 of the artificial graphite may include dispersing the artificial graphite in an ethanol/water solution, feeding it into a commercially available laser diffraction particle size measurement instrument (for example, Microtrac MT 3000), irradiating ultrasonic waves of about 28 kHz with the output of 60 W, and calculating the average particle size D50 at 50% of particle size distribution in the measurement instrument.

The conductive material may include, for example, any one selected from the group consisting of graphite, carbon black, carbon nanotubes, carbon fibers or metal fibers, metal powder, conductive whiskers, conductive metal oxide, activated carbon and polyphenylene derivatives, or a mixture of two or more thereof. More specifically, the conductive material may include any one selected from the group consisting of natural graphite, artificial graphite, super-p, acetylene black, Ketjen black, channel black, furnace black, lamp black, thermal black, Denka black, aluminum powder, nickel powder, zinc oxide, potassium titanate and titanium oxide, or a mixture of two or more thereof.

The negative electrode current collector is not limited to a particular one and may include those having high conductivity without causing a chemical change in the corresponding battery, and for example, may include stainless steel, copper, aluminum, nickel, titanium, calcined carbon, copper, aluminum or stainless steel treated with carbon, nickel, titanium or silver on the surface. The thickness of the negative electrode current collector is not limited to a particular range, but may generally range from 3 to 500 µm.

The binder polymer may include any polymer commonly used for electrodes in the technical field. Non-limiting examples of the binder polymer may include polyvinylidene fluoride-co-hexafluoropropylene, polyvinylidene fluoride-co-trichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetate propionate, cyanoethylpullulan, cyanoethylpolyvinylalcohol, cyanoethylcellulose, cyanoethylsucrose, pullulan or carboxyl methyl cellulose, but is not limited thereto.

In an embodiment of the present disclosure, the separator may include a porous polymer substrate and a porous coating layer present on at least one surface of the porous polymer substrate.

The separator is not limited to a particular type and may include any type of separator used for secondary batteries. The separator is not limited to a particular type and may include any type of separator for electrochemical devices that has electrical insulating properties and provides pathways for ion conduction. For example, the separator may include a polymer-containing porous sheet such as a polymer film or non-woven fabric. In an embodiment of the present disclosure, the separator may further have a heat-resistant coating layer including inorganic particles on the surface of the porous sheet.

In an embodiment of the present disclosure, the electrolyte solution may include a salt dissolved or dissociated in an organic solvent, wherein the salt may have an A⁺B⁻ structure, where A⁺ may include an alkali metal cation such asLi⁺, Na⁺, K⁺ or a combination thereof, and B⁻ may include an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, and the organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone (g-butyrolactone) or a mixture thereof, but is not limited thereto.

A method for manufacturing an electrode according to an aspect of the present disclosure includes:
(S1) dry-mixing the electrode active material, the conductive material and the binder polymer without a solvent to obtain a mixture;
(S2) feeding the mixture between a plurality of rolls to perform calendering to manufacture an electrode sheet; and
(S3) laminating the electrode sheet on at least one surface of the electrode current collector to manufacture the electrode,
wherein the binder polymer has the melt viscosity of 1500 Pa·s or less at 200°C and 0.1 Hz.

The step (S1) is a step of by mixing the components of the electrode film, i.e., the electrode active material, the conductive material and the binder polymer at a predefined mix ratio to obtain the mixture. The electrode active material, the conductive material and the binder polymer may be evenly dispersed within the mixture. That is, the electrode active material, the conductive material and the binder polymer in the mixture may be evenly distributed throughout the entire mixture and are not concentrated at certain areas.

In the step (S1), the mixing to obtain the mixture is performed for even distribution of the active material, the conductive material and the binder polymer, and because the components are mixed in powder form, the mixing method is not limited to a particular one and may include any method for simply mixing. However, the method is used to manufacture the dry electrode that does not use a solvent, so the mixing may use a dry mixing process, and may be performed by feeding the materials into a blender or a supermixer.

In an embodiment of the present disclosure, when the mixing is performed in a blender, to ensure uniformity, the mixing may be performed in the blender at 5,000 rpm to 20,000 rpm for 30 seconds to 20 minutes, and specifically at 10,000 rpm to 15,000 rpm for 30 seconds to 5 minutes.

In another embodiment of the present disclosure, when the mixing is performed in a supermixer, to ensure uniformity, the mixing may be performed in the supermixer at 500 rpm to 2,500 rpm, and specifically 1,000 rpm to 2,000 rpm, and the process time may be adjusted accordingly.

In the step (S2), the calendering is a step of forming the mixture into a film shape, and for example, rolling the mixture to manufacture a film having an average thickness of 50 µm to 300 µm. The calendering may be, for example, performed by one or more pairs of rolls facing each other, and the roll conditions may be controlled to the rotation speed of 5 rpm to 20 rpm at the temperature of 25°C to 250°C or 100°C to 200°C.

In an embodiment of the present disclosure, the electrode sheet is manufactured by forming the homogeneous mixture of the electrode active material, the conductive material and the binder polymer into a film shape. Accordingly, the electrode active material, the conductive material and the binder polymer may be evenly dispersed within the electrode sheet.

In an embodiment of the present disclosure, the method may include the step of stacking the obtained electrode sheet on at least one surface of the electrode current collector and laminating them to obtain the dry electrode. Alternatively, the obtained electrode film may be used like a free-standing film without the electrode current collector. To form the electrode film on at least one surface of the current collector in the lamination step, the method may further include the step of rolling the electrode film to the predetermined thickness and attaching it to the current collector. The lamination may be performed by a lamination roll, and in this instance, the lamination roll may be controlled to the temperature of 25°C to 250°C.

In an embodiment of the present disclosure, because the method for manufacturing the electrode does not use an organic solvent when forming the electrode active material layer, VOC emissions in the electrode manufacturing process may be significantly reduced.

Hereinafter, the present disclosure will be described in more detail through examples, but the following examples are provided to describe the present disclosure by illustration only, and the scope of the present disclosure is not limited thereto.

### Example 1

Polypropylene (LGC, H7918) having weight average molecular weight of 64,400 g/mol, complex viscosity of 15 Pa·s and melt index of 1800 g/10 min was prepared as a binder polymer. The binder polymer was ground using thermally induced phase separation such that the average particle size D50 was 8 µm.

Lithium nickel cobalt manganese oxide (NCM, HN803L, D50: 10 µm), lithium nickel cobalt manganese oxide (NCM, HN808A, D50: 8 µm), MWCNT (BT1003) and the binder polymer were blended at a weight ratio of 74:18.5:2.5:5 and mixed for 3 minutes.

Subsequently, the mixture was compressed to manufacture a positive electrode sheet, and compressed and laminated on a primer-treated positive electrode current collector to manufacture a positive electrode. In the manufactured positive electrode, the thickness excluding the current collector was 86.5 µm, and the porosity of the positive electrode active material layer was 26%.

### Example 2

A positive electrode was manufactured in the same way as Example 1, except that polypropylene (LGC, H7914) having weight average molecular weight of 94,900 g/mol, complex viscosity of 144 Pa·s and melt index of 1400 g/10 min was used as the binder polymer. In the manufactured positive electrode, the thickness excluding the current collector was 87.0 µm, and the porosity of the positive electrode active material layer was 26%.

### Comparative Example 1

The same procedure as Example 1 was performed, except that polypropylene (LGC, M1500) having weight average molecular weight of 258,100 g/mol, complex viscosity of 1597 Pa·s and melt index of 12 g/10 min was used as the binder polymer.

However, the manufactured positive electrode sheet was broken due to low mechanical strength.

### Comparative Example 2

5g PVdF (KUREAH, KF9700) having weight average molecular weight of 880,000g/ mol as a binder polymer was dissolved in 120g of NMP, and NCM (HN803L), NCM (HN808A) and MWCNT (BT1003) were added. Mixing was performed in an acoustic mixer at the intensity of 80G for 20 minutes. The weight ratio of the positive electrode active material, the conductive material and the binder polymer was the same as Example 1.

Subsequently, the mixture was evenly coated on a current collector using a Mathis coater and dried at 120°C for 10 minutes. Subsequently, pressure was applied to the dried positive electrode.

In the manufactured positive electrode, the thickness excluding the current collector was 88 µm, and the porosity of the positive electrode active material layer was 26%.

In Examples and Comparative Examples, the complex viscosity was measured using Advanced Rheometric Expansion System (ARES-G2) under the conditions of 180°C and 0.1 Hz.

In Examples and Comparative Examples, the melt index (melt flow index, MFI) was measured using a melt flow indexer under the conditions of 230°C and 2.16 kg in accordance with ASTM D-1238.

The porosity of the positive electrode active material layer may be calculated using the following Equation. 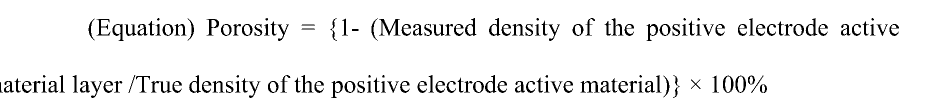 (Equation) Porosity = {1- (Measured density of the positive electrode active material layer /True density of the positive electrode active material)} × 100%

The porosity refers to the porosity of the positive electrode active material layer including the positive electrode active material layer. In the above Equation, the "measured density of the positive electrode active material layer" is the density calculated using the measured weight and volume of the positive electrode active material layer separated from the positive electrode current collector of the positive electrode that has been rolled, and the "true density of the positive electrode active material" is the density of the volume of the positive electrode active material particles excluding pores, and may be measured using a pycnometer (AccuPyc II 1340).

### Experimental Example 1

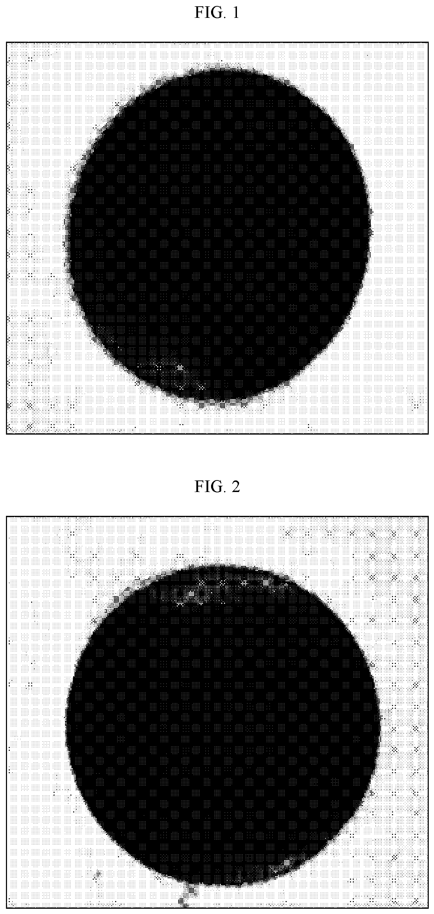

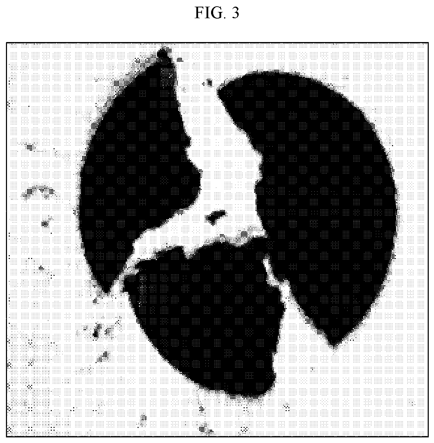

FIGS. 1 to 3 show the positive electrode sheets manufactured in Example 1, Example 2 and Comparative Example 1. Referring to FIG. 3, it was confirmed that the positive electrode sheet manufactured in Comparative Example 1 was broken due to insufficient mechanical strength.

### Experimental Example 2

The amount of VOCs produced in the process of manufacturing the positive electrode sheets of Examples and Comparative Examples was measured. In Example 1, Example 2 and Comparative Example 1, less than 1 wt% of VOCs were produced, but in Comparative Example 2 using a wet manufacturing method, 54.5 wt% of VOCs were produced.

The VOC measurement was performed using a thermogravimetric analyzer (TGA), and Mettler Toledo's TGA851e was used. After about 10 mg of sample was placed on a pan for analysis, 30°C was maintained for 5 minutes. Subsequently, the temperature was increased from 30°C to 200°C at the rate of 10°C/min, and maintained at 200°C for 30 minutes. During the entire analysis process, air was used as protective gas and purge gas.

### Experimental Example 3

A 500 µm-thick lithium metal was prepared as a negative electrode.

The as-prepared positive electrode and the lithium metal negative electrode were assembled to manufacture a coin half-cell. Specifically, the positive electrode and the negative electrode were placed with a 15 µm-thick polyethylene film interposed between them to manufacture an electrode assembly, the electrode assembly was placed in a coin-shaped (2032 type) secondary battery case, and an electrolyte solution was injected into the case to complete the half-cell. In this instance, the electrolyte solution contains 1 M LiPF₆ dissolved in an organic solvent in which ethylene carbonate (EC) and ethyl methyl carbonate (EMC) are mixed at a volume ratio of 1:2 (EC: EMC).

The half-cell was charged at 25°C with a constant current of 0.2C up to 4.25 V with a 0.05C cutoff. Subsequently, the half-cell was discharged with a constant current of 0.2C until 2.5 V, and the initial charge/discharge capacity was measured. TABLE 1 below summarizes the results.

**TABLE 1**

| | 0.1C discharge capacity (mAh/g) | 0.33C discharge capacity (mAh/g) | 0.5C discharge capacity (mAh/g) | 2C discharge capacity (mAh/g) |
|---|---|---|---|---|
| Example 1 | 185.6 | 174.2 | 166.9 | 72.1 |
| Example 2 | 185.2 | 173.9 | 165.2 | 71.2 |
| Comparative Example 2 | 184.1 | 170.1 | 159.6 | 63.5 |

Referring to the above TABLE 1, it was confirmed that the discharge capacity of the secondary batteries manufactured of Example 1 and Example 2 manufactured by the dry manufacturing method was higher than that of Comparative Example 2 manufactured by the wet manufacturing method.

Although the present disclosure has been hereinabove described with respect to certain number of embodiments and drawings, the present disclosure is not limited thereto, and it is obvious to persons having ordinary skill in the technical field pertaining to the present disclosure to make various changes and modifications within the technical scope of the present disclosure and the appended claims and their equivalents.

## Claims

1. An electrode comprising:
an electrode current collector; and an electrode active material layer present on at least one surface of the electrode current collector,
wherein the electrode active material layer includes an electrode active material, a conductive material and a binder polymer, and
wherein the binder polymer has a complex viscosity of 1500 Pa·s or less at 180°C and 0.1 Hz.

2. The electrode according to claim 1,
wherein the binder polymer has a melt index of 100 g/10 min or more under a load of 2.16 kg at 230°C.

3. The electrode according to claim 1,
wherein the binder polymer has a complex viscosity of 1000 Pa·s or less at 180°C and 0.1 Hz.

4. The electrode according to claim 1,
wherein the binder polymer includes a polyolefin-based polymer.

5. The electrode according to claim 1,
wherein the binder polymer includes polyethylene, polypropylene, polybutylene, polypentene or two or more thereof.

6. The electrode according to claim 1,
wherein a weight average molecular weight of the binder polymer is 5,000 g/mol to 200,000 g/mol.

7. The electrode according to claim 1,
wherein the binder polymer is included in an amount of 1 to 10 parts by weight based on total 100 parts by weight of the electrode active material layer.

8. The electrode according to claim 1,
wherein an average particle size (D50) of the binder polymer is 0.1 to 20 µm.

9. The electrode according to claim 1,
wherein an average particle size (D50) of the binder polymer is 0.01 to 2 times larger than an average particle size (D50) of the electrode active material.

10. The electrode according to claim 1,
wherein a tensile strength of the electrode is 10 gf/mm² to 100 gf/mm².

11. A secondary battery comprising:
a positive electrode; a negative electrode; a separator interposed between the positive electrode and the negative electrode; and an electrolyte solution,
wherein at least one of the positive electrode and the negative electrode is the electrode according to any one of claims 1 to 10.

12. A method for manufacturing an electrode comprising:
(S1) dry-mixing an electrode active material, a conductive material and a binder polymer without a solvent to obtain a mixture;
(S2) feeding the mixture between a plurality of rolls to perform calendaring to manufacture an electrode sheet; and
(S3) laminating the electrode sheet on at least one surface of an electrode current collector to manufacture the electrode,
wherein the binder polymer has a complex viscosity of 1500 Pa·s or less at 180°C and 0.1 Hz.
